# EUROPEAN PATENT APPLICATION

(11) **EP 4 509 463 A1**
(43) Date of publication of application: **19.02.2025**
(21) Application number: 23788418.4
(22) Date of filing: 14.04.2023
(51) Int. Cl.: C01B 33/107, B01J 27/125

(54) **METHOD FOR PRODUCING COMPOUND**

(30) Priority: 14.04.2022 JP 2022067188
(71) Applicant: Yamanaka Hutech Corporation, Kyoto-shi, Kyoto 606-0804 (JP)
(72) Inventor: TOMITA, Mitsuru, Kyoto-shi, Kyoto 606-0804 (JP); KIMURA, Naoto, Kyoto-shi, Kyoto 606-0804 (JP); HAMADA, Yoshitaka, Tokyo 102-0072 (JP)
(74) Representative: Cabinet Beau de Loménie
(86) International application number: PCT/JP2023/015149
(87) International publication number: WO 2023/200001

(57) **Abstract**

The method for producing a compound of the present invention includes a reaction step of producing a specific compound by subjecting a first halogen compound and a second halogen compound to a halogen exchange reaction in the presence of a solvent and a catalyst. The catalyst includes anhydrous aluminum halide. The first halogen compound contains at least one of a halogenated silane compound and a halogenated disilane compound. The second halogen compound and the specific compound are a first combination in which the second halogen compound contains an iodinating agent and the specific compound contains at least one of an iodosilane compound and an iododisilane compound, or a second combination in which the second halogen compound contains a brominating agent and the specific compound contains at least one of a bromosilane compound and a bromodisilane compound.

## Description

### TECHNICAL FIELD

The present invention relates to a method for producing a compound.

### BACKGROUND ART

Iodosilane compounds, iododisilane compounds, bromosilane compounds, and bromodisilane compounds (hereinafter, also collectively referred to as a specific compound) are widely used as raw materials for CVD methods (chemical vapor deposition methods) and ALD methods (atomic layer deposition methods) in semiconductor manufacturing. A silicon (such as silicon nitride)-containing film can be formed by performing a CVD method or an ALD method using a specific compound.

Among the specific compounds, diiodosilane, triiodosilane, triiododisilane, dibromosilane, tribromosilane, and tribromodisilane are highly reactive and have a moderate vapor pressure, and thus have been particularly demanded in recent years.

As a method for producing a specific compound, various methods are known, but a production method using a so-called Finkelstein reaction is most common. In the method for producing an iodosilane compound or an iododisilane compound using a Finkelstein reaction, a halogen exchange reaction is performed between a chlorosilane compound or a chlorodisilane compound and an iodinating agent (for example, an iodide salt). As a result, an SN₂ reaction (nucleophilic substitution bimolecular reaction) involving the exchange of halogen atoms between the chlorosilane compound or the chlorodisilane compound and the iodinating agent occurs, thereby producing an iodosilane compound or an iododisilane compound. The halogen exchange reaction is basically an equilibrium reaction. Therefore, in the above-described production method, the production of the iodosilane compound or the iododisilane compound can be promoted by constructing a reaction system with the use of the solubility difference among halide salts (an iodide salt or a chloride salt), or using an excessive amount of an iodide salt. An example of the method for producing a specific compound using a Finkelstein reaction includes a method described in Patent Document 1.

### PRIOR ART DOCUMENT

### PATENT DOCUMENT

Patent Document 1: US 10,384,944

### SUMMARY OF THE INVENTION

### PROBLEMS TO BE SOLVED BY THE INVENTION

However, the reaction efficiency of the above-described production method is not at an industrially sufficiently satisfactory level.

The present invention has been made in view of the above problems, and it is an object of the present invention to provide a method for producing a compound capable of producing a specific compound with high efficiency.

### MEANS FOR SOLVING THE PROBLEMS

The method for producing a compound of the present invention includes a reaction step of producing a specific compound by subjecting a first halogen compound and a second halogen compound to a halogen exchange reaction in the presence of a solvent and a catalyst. The catalyst includes anhydrous aluminum halide. The first halogen compound contains at least one of a halogenated silane compound and a halogenated disilane compound. The second halogen compound and the specific compound are a first combination in which the second halogen compound contains an iodinating agent and the specific compound contains at least one of an iodosilane compound and an iododisilane compound, or a second combination in which the second halogen compound contains a brominating agent and the specific compound contains at least one of a bromosilane compound and a bromodisilane compound.

### EFFECT OF THE INVENTION

The method for producing a compound of the present invention can produce a specific compound with high efficiency.

### MODE FOR CARRYING OUT THE INVENTION

In the present specification, Me, Et, and Ph represent a methyl group, an ethyl group, and a phenyl group, respectively. H, Al, Si, Cl, Br, I, Li, Na, and K represent a hydrogen atom, an aluminum atom, a silicon atom, a chlorine atom, a bromine atom, an iodine atom, a lithium atom, a sodium atom, and a potassium atom, respectively.

In the present specification, the halogenated silane compound is a compound represented by the chemical formula "Si-Q₄". Q is a hydrogen atom, a halogen atom, or a monovalent group other than a halogen atom (for example, a hydrocarbyl group). The four Qs may be the same as or different from each other, provided that at least one Q represents a halogen atom. The chlorosilane compound is a compound represented by the above-mentioned chemical formula "Si-Q₄", in which at least one Q represents a chlorine atom. The iodosilane compound is a compound represented by the above-mentioned chemical formula "Si-Q₄", in which at least one Q represents an iodine atom (provided that compounds corresponding to chlorosilane compounds are excluded). The bromosilane compound is a compound represented by the above-mentioned chemical formula "Si-Q₄", in which at least one Q represents a bromine atom (provided that compounds corresponding to chlorosilane compounds or iodosilane compounds are excluded).

The halogenated disilane compound is a compound represented by the chemical formula "Si₂-Q₆". Q is a hydrogen atom, a halogen atom, or a monovalent group other than a halogen atom (for example, a hydrocarbyl group). The six Qs may be the same as or different from each other, provided that at least one Q represents a halogen atom. The chlorodisilane compound is a compound represented by the above-mentioned chemical formula "Si₂-Q₆", in which at least one Q represents a chlorine atom. The iododisilane compound is a compound represented by the above-mentioned chemical formula "Si₂-Q₆", in which at least one Q represents an iodine atom (provided that compounds corresponding to chlorodisilane compounds are excluded). The bromodisilane compound is a compound represented by the above-mentioned chemical formula "Si₂-Q₆", in which at least one Q represents a bromine atom (provided that compounds corresponding to chlorodisilane compounds or iododisilane compounds are excluded).

Hereinafter, a description is made of embodiments of the present invention. However, the present invention is not limited to the embodiments at all, but can be implemented with appropriate modifications within the scope of the object of the present invention. Respective materials described in the embodiments of the present invention may be used alone or in combination of two or more thereof unless otherwise specified. However, from the viewpoint of accurately controlling the reaction and suppressing the generation of by-products, it is preferable that the first halogen compound and the second halogen compound be each used alone.

### <Method for producing compound>

A description is made of a method for producing a compound according to an embodiment of the present invention. The method for producing a compound of the present invention includes a reaction step of producing a specific compound by subjecting a first halogen compound and a second halogen compound to a halogen exchange reaction in the presence of a solvent and a catalyst. The catalyst includes anhydrous aluminum halide. The first halogen compound contains at least one of a halogenated silane compound and a halogenated disilane compound. The second halogen compound and the specific compound are a first combination in which the second halogen compound contains an iodinating agent and the specific compound contains at least one of an iodosilane compound and an iododisilane compound, or a second combination in which the second halogen compound contains a brominating agent and the specific compound contains at least one of a bromosilane compound and a bromodisilane compound. The first combination is a combination with which an iodination reaction is performed. The second combination is a combination with which a bromination reaction is performed.

The inventors of the present invention have conducted intensive studies on improvement of a method for producing a specific compound using a Finkelstein reaction. As a result, the inventors have found that when anhydrous aluminum halide is added as a catalyst in a known reaction system, the reaction rate is so remarkably increased even under mild conditions, that a specific compound can be produced with industrially practical production efficiency. Anhydrous aluminum halide is inexpensive and stably available compounds. Since the production efficiency of a specific compound can be improved by such anhydrous aluminum halide, the present invention has high industrial utility. In addition, the inventors have found that since the Finkelstein reaction using anhydrous aluminum halide hardly affects the Si-H bond and the Si-Si bond, generation of undesirable by-products can be suppressed. Furthermore, the inventors have found that the Finkelstein reaction using anhydrous aluminum halide can be applied to the synthesis of a wide range of silane compounds. The present invention is based on the above findings.

### [Reaction step]

In this step, the halogen atom (for example, Cl) of the first halogen compound and the halogen atom (I or Br) of the second halogen compound are substituted. As a result, a specific compound is produced. When an iodinating agent is used as the second halogen compound in this step, an iodosilane compound or an iododisilane compound is obtained as the specific compound (iodination reaction). When a brominating agent is used as the second halogen compound, a bromosilane compound or a bromodisilane compound is obtained as the specific compound (bromination reaction).

A specific method for this step includes, for example, a first step of dissolving the first halogen compound and the second halogen compound in a solvent, a second step of adding a catalyst to the reaction liquid obtained in the first step, and a third step of stirring the reaction liquid after the addition of the catalyst to cause the reaction. The first step and the second step are preferably performed under dry air in order to suppress hydrolysis of the first halogen compound. For the same reason, the solvent is preferably subjected to a dehydration treatment in advance. The third step is preferably performed in a sealed container in order to suppress volatilization and hydrolysis of the specific compound. After the third step, the solvent of the reaction liquid may be removed. The obtained specific compound may be subjected to purification. As a specific method for removing the solvent and performing purification, a known method can be employed.

In this step, the reaction temperature is preferably 30°C or higher and 65°C or lower, more preferably 40°C or higher and 60°C or lower. By setting the reaction temperature to 30°C or higher, the reaction can be promoted. By setting the reaction temperature to 65°C or lower, decomposition of the specific compound can be suppressed.

In this step, the yield can be improved as the reaction time is lengthened, while the production efficiency is lowered when the reaction time is excessively lengthened. Accordingly, the reaction time is preferably 2 hours or more and 120 hours or less, more preferably 24 hours or more and 48 hours or less.

The first halogen compound, the second halogen compound, and the specific compound are preferably a third combination in which the first halogen compound is represented by the following general formula (1), the second halogen compound is represented by the following general formula (3), and the specific compound is represented by the following general formula (4), or a fourth combination in which the first halogen compound is represented by the following general formula (2), the second halogen compound is represented by the following general formula (3), and the specific compound is represented by the following general formula (5).

HₙSiR₍₄₋ₙ₋ₘ₎Clₘ ... (1)

HₚSi₂R_{(6-p-q)}Cl_{q} ... (2)

MX ... (3)

HₙSiR₍₄₋ₙ₋ₘ₎Xₘ ··· (4)

HₚSi₂R_{(6-p-q)}X_{q} ··· (5)

In the general formulae (1) to (5), R represents a hydrocarbyl group having 1 or more and 6 or less carbon atoms. n represents an integer of 0 or more and 3 or less. m represents an integer of 1 or more and 4 or less. n + m is an integer of 1 or more and 4 or less. p represents an integer of 0 or more and 5 or less. q represents an integer of 1 or more and 6 or less. p + q is an integer of 1 or more and 6 or less. M represents an alkali metal atom or NH₄. X represents I or Br.

In the general formula (1), when "4 - n - m" represents an integer of 2 or more, a plurality of Rs may be the same as or different from each other. Similarly, in the general formula (2), when "6 - p - q" represents an integer of 2 or more, a plurality of Rs may be the same as or different from each other. In the general formula (4), when "4 - n - m" represents an integer of 2 or more, a plurality of Rs may be the same as or different from each other. In the general formula (5), when "6 - p - q" represents an integer of 2 or more, a plurality of Rs may be the same as or different from each other. In the general formula (4), when m represents an integer of 2 or more, a plurality of Xs may be the same as or different from each other. In the general formula (5), when q represents an integer of 2 or more, a plurality of Xs may be the same as or different from each other.

The hydrocarbyl group refers to a group obtained by removing one hydrogen atom from a hydrocarbon group. Examples of the hydrocarbyl group include an alkyl group, a cycloalkyl group, a phenyl group, an alkenyl group, a cycloalkenyl group, and an alkynyl group. Examples of the alkyl group include a methyl group, an ethyl group, a propyl group, a butyl group, a pentyl group, and a hexyl group. Examples of the cycloalkyl group include a cyclopentyl group and a cyclohexyl group. Examples of the alkenyl group include a vinyl group and a propenyl group. Examples of the cycloalkenyl group include a cyclopentenyl group and a cyclohexenyl group. Examples of the alkynyl group include an ethynyl group. The hydrocarbyl group is preferably a methyl group or an ethyl group.

The alkali metal atom represented by M is preferably Li, Na, or K. M preferably represents Li, Na, or NH₄.

### [First halogen compound]

The first halogen compound contains at least one of a halogenated silane compound and a halogenated disilane compound. The molecular weight of the first halogen compound is, for example, 300 or less. The first halogen compound is one of raw material compounds in this step.

In this step, the amount of the first halogen compound used in the reaction liquid is preferably 100.0 mM or more and 20,000.0 mM or less, more preferably 300.0 mM or more and 1200.0 mM or less.

As the first halogen compound, a chlorosilane compound or a chlorodisilane compound is preferable, and a compound represented by the general formula (1) or (2) is more preferable. The compound represented by the general formula (1) is a chlorosilane compound. The compound represented by the general formula (2) is a chlorodisilane compound.

Examples of the chlorosilane compound represented by the general formula (1) include chlorosilane (H₃SiCl), dichlorosilane (H₂SiCl₂), trichlorosilane (HSiCl₃), tetrachlorosilane (SiCl₄), chloro(methyl)silane (H₂SiMeCl), chloro(ethyl)silane (H₂SiEtCl), chloro(phenyl)silane (H₂SiPhCl), dichloro (methyl) silane (HSiMeCl₂), dichloro(ethyl)silane (HSiEtCl₂), dichloro(phenyl)silane (HSiPhCl₂), trichloro(methyl)silane (SiMeCl₃), trichloro(ethyl)silane (SiEtCl₃), trichloro(phenyl)silane (SiPhCl₃), chloro(dimethyl)silane (HSiMe₂Cl), chloro(diethyl)silane (HSiEt₂Cl), chloro(methyl) (ethyl)silane (HSiMeEtCl), and chloro(trimethyl)silane (SiMe₃Cl).

Examples of the chlorodisilane compound represented by the general formula (2) include chlorodisilane (H₅Si₂Cl), dichlorodisilane (H₄Si₂Cl₂), trichlorodisilane (H₃Si₂Cl₃), tetrachlorodisilane (H₂Si₂Cl₄), pentachlorodisilane (HSi₂Cl₅), hexachlorodisilane (Si₂Cl₆), chloro(methyl)disilane (H₄Si₂MeCl), chloro (ethyl) disilane (H₄Si₂EtCl), chloro (phenyl) disilane (H₄Si₂PhCl), dichloro (methyl) disilane (H₃Si₂MeCl₂), trichloro (methyl) disilane (H₂Si₂MeCl₃), tetrachloro (methyl) disilane (HSi₂MeCl₄), pentachloro(methyl)disilane (Si₂MeCl₅), chloro (dimethyl) disilane (H₃Si₂Me₂Cl), chloro (methyl) (ethyl) disilane (H₃Si₂MeEtCl), dichloro (dimethyl) disilane (H₂Si₂Me₂Cl₂), chloro (trimethyl) disilane (H₂Si₂Me₃Cl), chloro(tetramethyl)disilane (HSi₂Me₄Cl), and chloro (pentamethyl) disilane (Si₂Me₅Cl).

Here, when a first halogen compound having an H-Si bond is used in the production of a known specific compound, the H-Si bond may be cleaved during the reaction to generate undesirable by-products. On the other hand, in the method for producing a compound of the present invention, even when the first halogen compound having an H-Si bond is used, cleavage of the H-Si bond can be suppressed. Accordingly, the method for producing a compound of the present invention is suitable as a method for producing a specific compound having an H-Si bond. From the above, in the general formula (1) representing the first halogen compound, n preferably represents an integer of 1 or more and 3 or less. In the general formula (2) representing the first halogen compound, p preferably represents an integer of 1 or more and 5 or less.

Similarly, when a first halogen compound having an Si-Si bond (halogenated disilane compound) is used in the production of a known specific compound, the Si-Si bond may be cleaved during the reaction to generate undesirable by-products. Generation of by-products is remarkable when the first halogen compound having both an H-Si bond and an Si-Si bond is used. On the other hand, in the method for producing a compound of the present invention, even when the first halogen compound having an H-Si bond and an Si-Si bond is used, cleavage of both the H-Si bond and the Si-Si bond can be suppressed. Accordingly, the method for producing a compound of the present invention is suitable as a method for producing a specific compound having an Si-Si bond, and is further suitable as a method for producing a specific compound having both an H-Si bond and an Si-Si bond.

The first halogen compound is preferably H₂SiCl₂, HSiCl₃, or H₃Si₂Cl₃ (in particular, H₃Si-SiCl₃).

### [Second halogen compound]

The second halogen compound contains at least one of an iodinating agent and a brominating agent. The molecular weight of the second halogen compound is, for example, 300 or less. The second halogen compound is one of raw material compounds in this step.

When an iodinating agent is used as the second halogen compound, an iodosilane compound or an iododisilane compound is obtained as the specific compound. When a brominating agent is used as the second halogen compound, a bromosilane compound or a bromodisilane compound is obtained as the specific compound.

As described above, the second halogen compound is preferably a compound represented by the general formula (3). Among the compounds represented by the general formula (3), a compound in which X represents I is an iodinating agent. Among the compounds represented by the general formula (3), a compound in which X represents Br is a brominating agent.

Examples of the second halogen compound include NH₄I, NH₄Br, LiI, NaI, KI, LiBr, NaBr, and KBr. When the second halogen compound and the specific compound are the above-described first combination (the case where the second halogen compound contains an iodinating agent, and the specific compound contains at least one of an iodosilane compound and an iododisilane compound), NaI is preferable as the iodinating agent. NaI is an inexpensive compound, but has low reactivity, and thus has not been used in a known method for producing a specific compound. Since the present invention can produce an iodosilane compound or an iododisilane compound using an inexpensive compound such as NaI, industrial utility is high.

When the second halogen compound and the specific compound are the above-described second combination (the case where the second halogen compound contains a brominating agent, and the specific compound contains at least one of a bromosilane compound and a bromodisilane compound), LiBr is preferable as the brominating agent.

In this step, the amount of the second halogen compound used is preferably 100.0 mol% or more and 1000.0 mol% or less, more preferably 200.0 mol% or more and 700.0 mol% or less, still more preferably 300.0 mol% or more and 500.0 mol% or less when the total number of halogen atoms bonded to a silicon atom in the first halogen compound is 100 mol%. Theoretically, it is sufficient that the amount of the second halogen compound used is 100.0 mol%. However, using an excessive amount of the second halogen compound can improve the reaction rate.

Here, a description is made of a specific example of the "total number of halogen atoms bonded to a silicon atom in the first halogen compound". As an example, when one mole of chlorosilane (H₃SiCl) is used as the first halogen compound, the total number of halogen atoms (chlorine atoms) bonded to a silicon atom in the first halogen compound is one mole. Therefore, in this example, 1 mol = 100 mol%. As another example, when two moles of trichlorosilane (HSiCl₃) is used as the first halogen compound, the total number of halogen atoms (chlorine atoms) bonded to a silicon atom in the first halogen compound is six moles. Therefore, in this example, 6 mol = 100 mol%.

In this step, the second halogen compound transfers its own halogen atom to the first halogen compound and also receives the halogen atom of the first halogen compound by itself. The second halogen compound after the reaction (the second halogen compound after receiving the halogen atom of the first halogen compound) is preferably insoluble in a solvent. By using such a second halogen compound, the second halogen compound after the reaction can be removed from the reaction system, and as a result, the reaction can be prevented from reaching the chemical equilibrium to stop, and the generation of by-products can be suppressed.

### [Specific compound]

The specific compound is a reaction product in this step. In this step, the halogen atom of the first halogen compound is substituted with the iodine atom or the bromine atom of the second halogen compound to yield the specific compound.

When the first halogen compound having two or more halogen atoms is used in this step, not only the specific compound but also an intermediate may be produced. The intermediate is a compound in which only a part of the two or more halogen atoms of the first halogen compound are iodinated or fluorinated. A main purpose of this step is to yield a specific compound, but the intermediate also has a certain industrial value. Specifically, when HSiCl₃ is used as the first halogen compound and an iodinating agent is used as the second halogen compound, HSiCl₂I and HSiClI₂ which are intermediates may be obtained in addition to HSiI₃ which is a specific compound. By sufficiently ensuring the reaction time in this step, the specific compound is produced from the intermediate, so that the production amount of the intermediate can be reduced.

### [Catalyst]

The catalyst includes anhydrous aluminum halide. As described above, the specific compound can be produced with high efficiency by using anhydrous aluminum halide as the catalyst in the method for producing a specific compound using a Finkelstein reaction. In particular, the hydrolysis reaction of the first halogen compound can be suppressed by using an anhydride as the catalyst. As the anhydrous aluminum halide, anhydrous aluminum chloride (AlCl₃), anhydrous aluminum bromide (AlBr₃), or anhydrous aluminum iodide (AlI₃) is preferable.

In particular, when the second halogen compound and the specific compound are the first combination (that is, the case where the iodination reaction is performed in this step), anhydrous aluminum chloride which is an inexpensive compound is preferable as the catalyst. On the other hand, when the second halogen compound and the specific compound are the second combination (that is, the case where the bromination reaction is performed in this step), anhydrous aluminum bromide is preferable as the catalyst from the viewpoint of reactivity.

The amount of the catalyst used is preferably 0.1 mol% or more and 50.0 mol% or less, more preferably 1.0 mol% or more and 10.0 mol% or less when the total number of halogen atoms bonded to a silicon atom in the first halogen compound is 100 mol%.

### [Solvent]

The solvent is preferably an aprotic solvent from the viewpoint of suppressing generation of by-products. Examples of the aprotic solvent include hydrocarbon compounds, aromatic hydrocarbon compounds, ether compounds, ketone compounds, ester compounds, chlorinated hydrocarbon compounds, chlorinated aromatic hydrocarbon compounds, acetonitrile, N,N-dimethylformamide, and dimethyl sulfoxide. Examples of the hydrocarbon compound include hexane, octane, and decane. Examples of the aromatic hydrocarbon compound include toluene, benzene, and xylene. Examples of the ether compound include diethyl ether and tetrahydrofuran. Examples of the ketone compound include acetone. Examples of the ester compound include ethyl acetate. Examples of the chlorinated hydrocarbon compound include dichloromethane and chloroform. Examples of the chlorinated aromatic hydrocarbon compound include chlorobenzene and dichlorobenzene. The solvent is preferably hexane.

### EXAMPLES

Hereinafter, a further description is made of the present invention with reference to Examples. However, the present invention is not limited to the Examples. In the Examples, "mol%" refers to mol% when the total number of halogen atoms bonded to a silicon atom in the first halogen compound is 100 mol%.

### [GC-MS]

In the Examples, the amount of each compound (first halogen compound, specific compound, and intermediate) was measured by a gas chromatograph mass spectrometer (a device combining "GCMS-QP 2010 Plus" manufactured by Shimadzu Corporation and "GCMS-QP 2010 Ultra" manufactured by Shimadzu Corporation). Detailed conditions are shown below.
· Capillary column: "SH-Rtx -1" (30 m × 0.32 mm I.D. × 1.00 µm) manufactured by Shimadzu Corporation
· Carrier gas: Helium
· In-column flow rate: 1.94 mL/min
· Split ratio: 200
· Sample injection amount: 5 µL
· Vaporizing chamber temperature: 300°C
· Detection method: Total ion chromatogram (TIC)

### <Method for producing specific compound>

### [Example 1]

A stirrer bar for a magnetic stirrer was put in a 450 mL volume cylindrical stainless steel sealed container (hereinafter, simply described as a container), followed by placement in an unsealed state in a 75°C drying device overnight. In this way, the container and the stirrer bar were dried.

Under dry air, 100.0 mL of dehydrated hexane, 5.0 g (37.0 mmol) of trichlorosilane as the first halogen compound, and 49.4 g (369.0 mmol, 332.4 mol%) of lithium iodide as the second halogen compound (iodinating agent) were added in a vessel. Next, in the atmosphere, 1.0 g (7.5 mmol, 6.8 mol%) of anhydrous aluminum chloride as the catalyst was further added to the container, and then the container was sealed. Next, the container was placed in an oil bath set at 60°C. Next, the stirrer bar was rotated using a magnetic stirrer to stir the contents in the container. Thereby, the contents in the vessel were reacted (reaction temperature: 60°C).

One day later, the container was taken out from the oil bath and allowed to cool until the temperature of the contents reached room temperature (reaction time: 1 day). Next, the contents in the container were filtered (pressure: 0.1 MPa, PTFE filter paper was used, and filtration pore size: 0.2 µm) with a pressure filter (manufactured by ADVANTEC). The obtained filtrate was transferred to a glass bottle and stored at -18°C.

Next, components contained in the filtrate were identified by GC-MS. As a result, it was confirmed that triiodosilane (specific compound, HSiI₃) was contained in the filtrate. The yield of triiodosilane in the above reaction was 62 mol%. The filtrate described above also contained the first halogen compound (HSiCl₃) remaining without undergoing the reaction, HSiICl₂ as the first intermediate, and HSiI₂Cl as the second intermediate. The yields of the respective compounds were 15 mol% for HSiCl₃, 7 mol% for HSiICl₂, and 17 mol% for HSiI₂Cl. In the filtrate described above, a by-product (for example, a by-product produced by cleavage of a Si-H bond of HSiCl₃) was confirmed only at a trace amount level.

In the Examples, the "yield" refers to the ratio of each compound when the total amount of the silane compound or the disilane compound contained in the filtrate is 100 mol%. For convenience of measurement accuracy, the total value of the yields of the respective compounds contained in the filtrate may not be 100 mol%.

### [Examples 2 to 6 and Comparative Examples 1 to 4]

Methods for producing a specific compound of Example 2 to 6 and Comparative Examples 1 to 4 were performed according to the same operations as those in the method for producing a specific compound of Example 1 except that the following changes were made. In the methods for producing a specific compound of Examples 2 to 6 and Comparative Examples 1 to 4, the types and amounts of the first halogen compound, the second halogen compound and the catalyst to be used, and the reaction time were changed as shown in Table 1 below.

Details of the compounds shown in Table 1 below are as follows.
HSiCl₃: trichlorosilane (manufactured by Tokyo Chemical Industry Co., Ltd.)
H₃Si-SiCl₃: 1,1,1-trichlorodisilane (in-house synthetic product)
AlCl₃: anhydrous aluminum chloride (manufactured by Tokyo Chemical Industry Co., Ltd.)
AlI₃: anhydrous aluminum iodide (manufactured by Tokyo Chemical Industry Co., Ltd.)
AlBr₃: anhydrous aluminum bromide (manufactured by Tokyo Chemical Industry Co., Ltd.)
LiI: lithium iodide (manufactured by Tokyo Chemical Industry Co., Ltd.)
LiBr: lithium bromide (manufactured by Tokyo Chemical Industry Co., Ltd.)

**[Table 1]**

| | First halogen compound | | Second halogen compound | | | Catalyst | | | Reaction time |
|---|---|---|---|---|---|---|---|---|---|
| | Type | mmol | Type | mmol | mol% | Type | mmol | mol% | |
| Example 1 | HSiCl₃ | 37.0 | LiI | 369.0 | 332.4 | AlCl₃ | 7.5 | 6.8 | 1 day |
| Example 2 | HSiCl₃ | 37. 0 | LiI | 369.0 | 332.4 | AlCl₃ | 7.5 | 6.8 | 2.5 h |
| Comparative Example 1 | HSiCl₃ | 37. 0 | LiI | 369.0 | 332.4 | - | - | - | 2.5 h |
| Example 3 | H₃Si-SiCl₃ | 51. 0 | LiI | 369.0 | 241.2 | Al I₃ | 50.0 | 32.7 | 3 days |
| Example 4 | H₃Si-SiCl₃ | 51. 0 | LiI | 369.0 | 241.2 | AlCl₃ | 50.0 | 32.7 | 3 days |
| Comparative Example 2 | H₃Si-SiCl₃ | 51. 0 | LiI | 369.0 | 241.2 | - | - | - | 3 days |
| Example 5 | H₃Si-SiCl₃ | 94.0 | LiBr | 940.0 | 333.3 | AlBr₃ | 94.0 | 33.3 | 4 days |
| Comparative Example 3 | H₃Si-SiCl₃ | 94.0 | LiBr | 940.0 | 333.3 | - | - | - | 4 days |
| Example 6 | HSiCl₃ | 37. 0 | LiBr | 370.0 | 333.3 | AlBr₃ | 37. 0 | 33.3 | 4 days |
| Comparative Example 4 | HSiCl₃ | 37.0 | LiBr | 370.0 | 333.3 | - | - | - | 4 days |

The yields of the respective compounds in Examples 1 and 2, and Comparative Example 1 are shown in Table 2 below. In Example 2 in which anhydrous aluminum chloride was used as the catalyst, 41 mol% of the first halogen compound was consumed during the reaction time of 2.5 hours, and a small amount (3 mol%) of the specific compound (HSiI₃) was produced. As shown in Example 1, when the reaction time was sufficiently extended in Example 2, the specific compound was produced in a high yield (62 mol%). On the other hand, in Comparative Example 1 in which the catalyst was not used, only 17 mol% of the first halogen compound was consumed and no specific compound was produced at all during the reaction time of 2.5 hours. From this, it has been confirmed that the reaction efficiency is considerably improved by using anhydrous aluminum chloride as the catalyst in iodination of the first halogen compound.

**[Table 2]**

| | Catalyst | Reaction time | Yield [mol%] | | | |
|---|---|---|---|---|---|---|
| | | | HSiCl₃ | HSiICl₂ | HSiI₂Cl | HSiI₃ |
| Example 1 | AlCl₃ | 1 day | 15 | 7 | 17 | 62 |
| Example 2 | AlCl₃ | 2.5 h | 59 | 29 | 8 | 3 |
| Comparative Example 1 | - | 2.5 h | 83 | 16 | 1 | 0 |

The yields of the respective compounds in Examples 3 and 4, and Comparative Example 2 are shown in Table 3 below. As shown in Examples 3 and 4, the specific compound (H₃Si-SiI₃) was produced in a high yield (89 mol% or 86 mol%) by using anhydrous aluminum chloride or anhydrous aluminum iodide as the catalyst. On the other hand, in Comparative Example 2 in which the catalyst was not used, only 1 mol% of the first halogen compound was consumed, and only 1 mol% of the specific compound was produced. From this, it has been confirmed that anhydrous aluminum halide is effective in iodination of various first halogen compounds. Although omitted in Table 3, in Examples 3 and 4, a small amount of a compound considered to be tetraiodosilane was produced.

**[Table 3]**

| | Catalyst | Reaction time | Yield [mol%] | | | |
|---|---|---|---|---|---|---|
| | | | H₃Si-SiCl₃ | H₃Si-SiICl₂ | H₃Si-SiI₂Cl | H₃Si-SiI₃ |
| Example 3 | AlI₃ | 3 days | 0 | 0 | 4 | 89 |
| Example 4 | AlCl₃ | 3 days | 0 | 2 | 7 | 86 |
| Comparative Example 2 | - | 3 days | 99 | 0 | 0 | 1 |

The yields of the respective compounds in Examples 5 and Comparative Example 3 are shown in Table 4 below. As shown in Example 5, by using anhydrous aluminum bromide as the catalyst, 95 mol% of the first halogen compound was consumed, and the specific compound (H₃Si-SiBr₃) was produced at a constant yield (19 mol%). On the other hand, in Comparative Example 3 in which the catalyst was not used, only 72 mol% of the first halogen compound was consumed, and only a very small amount (2 mol%) of the specific compound was produced. It has been confirmed that the reaction efficiency of the synthesis reaction of Example 5 is remarkably higher than that of at least the synthesis reaction of Comparative Example 3, although further optimization such as extension of the reaction time is required. From this, it has been confirmed that anhydrous aluminum halide is also effective as the catalyst for bromination.

**[Table 4]**

| | Catalyst | Reaction time | Yield [mol%] | | | |
|---|---|---|---|---|---|---|
| | | | H₃Si-SiCl₃ | H₃Si-SiBrCl₂ | H₃Si-SiBr₂Cl | H₃Si-SiBr₃ |
| Example 5 | AlBr₃ | 4 days | 5 | 28 | 48 | 19 |
| Comparative Example 3 | - | 4 days | 28 | 45 | 24 | 2 |

The yields of the respective compounds in Examples 6 and Comparative Example 4 are shown in Table 5 below. As shown in Example 6, by using anhydrous aluminum bromide as the catalyst, 36 mol% of the first halogen compound was consumed, and the specific compound (HSiBr₃) was produced at a constant yield (14 mol%). On the other hand, in Comparative Example 4 in which the catalyst was not used, only 6 mol% of the first halogen compound was consumed and no specific compound was produced at all. It has been confirmed that the reaction efficiency of Example 6 is remarkably higher than that of at least Comparative Example 4, although further optimization such as extension of the reaction time is required. From this, it has been confirmed that anhydrous aluminum halide is effective in bromination of various first halogen compounds.

**[Table 5]**

| | Catalyst | Reaction time | Yield [mol%] | | | |
|---|---|---|---|---|---|---|
| | | | HSiCl₃ | HSiBrCl₂ | HSiBr₂Cl | HSiBr₃ |
| Example 6 | AlBr₃ | 4 days | 64 | 6 | 16 | 14 |
| Comparative Example 4 | - | 4 days | 94 | 5 | 1 | 0 |

As shown in Examples 1 to 6 and Comparative Examples 1 to 4 described above, the production efficiency of the specific compound could be considerably improved by using anhydrous aluminum halide as the catalyst in the method for producing a specific compound using a Finkelstein reaction.

### INDUSTRIAL APPLICABILITY

The method for producing a compound of the present invention can provide iodosilane compounds, iododisilane compounds, bromosilane compounds, and bromodisilane compounds which are materials useful in semiconductor production.

## Claims

1. A method for producing a compound, comprising a reaction step of producing a specific compound by subjecting a first halogen compound and a second halogen compound to a halogen exchange reaction in a presence of a solvent and a catalyst,
the catalyst including anhydrous aluminum halide,
the first halogen compound including at least one of a halogenated silane compound and a halogenated disilane compound, and
the second halogen compound and the specific compound being
a first combination in which the second halogen compound includes an iodinating agent, and the specific compound includes at least one of an iodosilane compound and an iododisilane compound, or
a second combination in which the second halogen compound includes a brominating agent, and the specific compound includes at least one of a bromosilane compound and a bromodisilane compound.

2. The method for producing a compound according to claim 1, wherein the anhydrous aluminum halide includes at least one of anhydrous aluminum chloride, anhydrous aluminum bromide, and anhydrous aluminum iodide.

3. The method for producing a compound according to claim 1, wherein the solvent includes an aprotic solvent.

4. The method for producing a compound according to claim 1, wherein the first halogen compound includes at least one of a chlorosilane compound and a chlorodisilane compound.

5. The method for producing a compound according to claim 1, wherein the first halogen compound, the second halogen compound, and the specific compound are
a third combination in which
the first halogen compound is represented by a following general formula (1),
the second halogen compound is represented by a following general formula (3), and
the specific compound is represented by a following general formula (4), or
a fourth combination in which
the first halogen compound is represented by a following general formula (2),
the second halogen compound is represented by a following general formula (3), and
the specific compound is represented by a following general formula (5):
HₙSiR₍₄₋ₙ₋ₘ₎Clₘ ··· (1)
HₚSi₂R_{(6-p-q)}Cl_{q} ··· (2)
MX ... (3)
HₙSiR₍₄₋ₙ₋ₘ₎Xₘ ··· (4)
HₚSi₂R_{(6-p-q)}X_{q} ... (5)
wherein in the general formulae (1) to (5),
R represents a hydrocarbyl group having 1 or more and 6 or less carbon atoms,
n represents an integer of 0 or more and 3 or less,
m represents an integer of 1 or more and 4 or less,
n + m is an integer of 1 or more and 4 or less,
p represents an integer of 0 or more and 5 or less,
q represents an integer of 1 or more and 6 or less,
p + q is an integer of 1 or more and 6 or less,
M represents an alkali metal atom or NH₄, and
X represents I or Br.

6. The method for producing a compound according to claim 5, wherein in the general formula (3), M represents Li, Na, or NH₄.

7. The method for producing a compound according to claim 5, wherein
in the general formula (1), n represents an integer of 1 or more and 3 or less, and
in the general formula (2), p represents an integer of 1 or more and 5 or less.

8. The method for producing a compound according to claim 7, wherein the first halogen compound includes at least one of H₂SiCl₂, HSiCl₃, and H₃Si₂Cl₃.

9. The method for producing a compound according to claim 2, wherein
the second halogen compound and the specific compound are the second combination, and
the anhydrous aluminum halide includes the anhydrous aluminum bromide.

10. The method for producing a compound according to claim 1, wherein
the second halogen compound and the specific compound are the second combination, and
the brominating agent includes LiBr.

11. The method for producing a compound according to claim 1, wherein when a total number of halogen atoms bonded to a silicon atom in the first halogen compound is 100 mol%, an amount of the catalyst used is 0.1 mol% or more and 50.0 mol% or less.
